# EUROPÄISCHE PATENTANMELDUNG

(11) **EP 3 269 582 A1**
(43) Veröffentlichungstag der Anmeldung: **17.01.2018**
(21) Anmeldenummer: 17176838.5
(22) Anmeldetag: 20.06.2017
(51) Int. Cl.: B60L 5/14, B60L 5/28

(54) **NICHT SCHIENENGEBUNDENES ELEKTRISCH ODER HYBRID-ELEKTRISCH ANGETRIEBENES FAHRZEUG**

(30) Priorität: 15.07.2016 DE 102016212987
(71) Anmelder: Siemens Aktiengesellschaft, 80333 München (DE)
(72) Erfinder: Bühs, Florian, 10777 Berlin (DE); Francke, Jürgen, 12524 Berlin (DE); Gerstenberg, Frank, 10409 Berlin (DE); Jakobi, Steffen, 12524 Berlin (DE); Sänger, Göran, 12587 Berlin (DE)

(57) **Zusammenfassung**

Die Erfindung betrifft ein nicht schienengebundenes Fahrzeug (1) für den Betrieb an einer zweipoligen Oberleitungsanlage (3). Das Fahrzeug (1) umfasst einen Hublift (20) mit einem Liftantrieb (23) zur Erzeugung einer Hubbewegung einer Liftplattform (14) von einer unteren Parkposition in eine obere Betriebsposition. Das Fahrzeug (1) umfasst ferner einen Stromabnehmer (7) zur Einspeisung elektrischer Energie mit mindestens einem eine Schleifleistenanordnung (9) tragenden Tragausleger (8). Der Stromabnehmer (7) hat einen Kippantrieb (17) zur Erzeugung einer vertikalen Stellbewegung der Schleifleistenanordnung (9) durch Aufrichten des Tragauslegers (8) aus einer Ruheposition in eine angestellte Kontaktposition und einen Schwenkantrieb (27) zur Erzeugung einer lateralen Stellbewegung der Schleifleistenanordnung (9). Erfindungsgemäß umfasst der der Stromabnehmer (7) eine Rückführeinrichtung (30) zur selbsttätigen Rückführung der Liftplattform (14) in ihre Parkposition und des Tragauslegers (8) in seine Ruheposition. Diese umfasst Erfassungsmittel (31) zur Erfassung des Betriebszustandes des Stromabnehmers, Auslösemittel (32) zur Einleitung einer Fallbewegung der Liftplattform (14) und des Tragauslegers (8) durch Deaktivierung von Kippantrieb (17), Schwenkantrieb (27) und Liftantrieb (23) bei Erfassung eines vorab definierbaren kritischen Betriebszustandes des Stromabnehmers (7), und Zentriermittel (33) zur seitlichen Zwangsführung des fallenden Tragauslegers (8) in seine Ruheposition. Hierdurch kann die Betriebssicherheit des Fahrzeugs (1) in kritischen Fahrsituationen und Betriebszuständen im Hinblick auf den Stromabnehmer (7) verbessert werden.

## Beschreibung

Die Erfindung bezieht sich auf ein nicht schienengebundenes Fahrzeug nach dem Oberbegriff des Patentanspruches 1.

Aus der Offenlegungsschrift DE 10 2012 223 068 A1 ist ein nicht schienengebundenes Fahrzeug bekannt, welches einen Stromabnehmer zur Einspeisung elektrischer Energie aus einer zweipoligen Oberleitung umfasst. Der Stromabnehmer weist ein eine Wippe mit Schleifleisten tragendes Gestell auf, das zur Herstellung bzw. Unterbrechung eines elektrischen Schleifkontaktes von Schleifleisten und Oberleitung bewegbar ausgebildet ist. Das Gestell weist mindestens zwei Tragausleger auf, an deren fahrdrahtseitigen Enden die Wippe angelenkt ist und deren fahrzeugseitige Enden sich über untere Gelenkgruppen am Fahrzeugrahmen abstützen. Die Wippe ist durch eine Kippbewegung der Tragausleger um horizontale Kippachsen der unteren Gelenkgruppen vertikal anheb- bzw. absenkbar. Die Wippe ist ferner durch eine Schwenkbewegung der Tragausleger um vertikale Schwenkachsen der unteren Gelenkgruppen seitlich auslenkbar. Die unteren Gelenkgruppen stützen sich auf einer mit einem Fahrzeugrahmen des Fahrzeugs verbundenen Hubvorrichtung ab, mittels welcher der Stromabnehmer zwischen einer unteren Parkposition und einer oberen Betriebsposition vertikal verfahrbar ist.

Der Erfindung liegt die Aufgabe zugrunde, ein gattungsgemäßes Fahrzeug bereitzustellen, bei welchem die Betriebssicherheit in kritischen Fahrsituationen und Betriebszuständen im Hinblick auf den Stromabnehmer verbessert ist.

Die Aufgabe wird erfindungsgemäß gelöst durch ein Fahrzeug der eingangs genannten Art mit den im kennzeichnenden Teil des Patentanspruches 1 angegebenen Merkmalen.

Bei dem nicht schienengebundenen, elektrisch oder hybrid-elektrisch angetriebenen Fahrzeug kann es sich um ein Straßenfahrzeug, insbesondere um einen Lastkraftwagen wie eine Sattelzugmaschine oder ein anderes schweres Nutzfahrzeug handeln. Das Fahrzeug ist für den Betrieb auf einer elektrifizierten Fahrbahn, etwa einem Fahrstreifen einer mehrstreifigen Autobahn vorgesehen. An der Fahrbahn ist dafür eine zweipolige Oberleitungsanlage mit als Hin- und Rückleiter ausgebildeten Fahrdrähten installiert. Die Fahrdrähte verlaufen parallel zueinander etwa mittig über dem Fahrstreifen. Das Fahrzeug umfasst einen Hublift mit einem sich auf einen Fahrzeugrahmen abstützenden Liftgestell, mit einer vertikal verfahrbaren Liftplattform und mit einem beispielsweise pneumatisch oder hydraulisch arbeitenden Liftantrieb zur Erzeugung einer Hubbewegung der Liftplattform von einer unteren Parkposition in eine obere Betriebsposition. Das Fahrzeug umfasst ferner einen Stromabnehmer zur Einspeisung elektrischer Energie für die Traktionsversorgung des elektrischen Antriebs. Der Stromabnehmer weist mindestens einen Tragausleger auf, der an seinem freien Ende eine Schleifleistenanordnung trägt. Die Schleifleistenanordnung ist als an sich bekannte Wippe ausgebildet, die gegeneinander elektrisch isolierte Schleifleisten für jeden der beiden Fahrdrähte trägt. Vorzugsweise weist der Stromabnehmer aber zwei parallel ausgerichtete Tragausleger auf, von welchen jeder eine Schleifleistenanordnung zum Beschleifen eines der beiden Fahrdrähte trägt. An seinem fahrzeugseitigen Ende ist der oder sind die Tragausleger derart an der Liftplattform angelenkt, dass jeder Tragausleger und seine Schleifleistenanordnung um eine horizontale Kippachse und um eine zu dieser senkrecht stehende Schwenkachse drehbar sind. Der Stromabnehmer weist einen Kippantrieb zur Erzeugung einer vertikalen Stellbewegung einer Schleifleistenanordnung durch Aufrichten eines Tragauslegers aus einer Ruheposition in eine angestellte Kontaktposition auf. In der Ruheposition liegt der Tragausleger und ist parallel zur Fahrzeuglängsachse ausgerichtet. In der Kontaktposition ist der Tragausleger derart angestellt aufgerichtet, dass elektrischer Kontakt zwischen Schleifleistenanordnung und Fahrdraht herstellbar ist. Der Stromabnehmer weist einen Schwenkantrieb zur Erzeugung einer lateralen Stellbewegung der Schleifleistenanordnung durch seitliches Verschwenken eines in Kontaktposition angestellten Tragauslegers auf. Der Stromabnehmer weist eine Sensoreinrichtung zur Erfassung der seitlichen Ist-Lage der Schleifleistenanordnung relativ zu den Fahrdrähten der Oberleitungsanlage auf. Der Stromabnehmer weist eine Steuereinrichtung zur Ansteuerung eines Schwenkantriebs in Abhängigkeit der erfassten Ist-Lage mit dem Ziel auf, den Schleifkontakt zwischen Schleifleistenanordnung und Fahrdraht bei Lenkmanövern des Fahrzeugs möglichst aufrecht zu erhalten.

Erfindungsgemäß weist der Stromabnehmer eine Rückführeinrichtung zur selbsttätigen Rückführung der Liftplattform in ihre Parkposition und des Tragauslegers in seine Ruheposition auf. Die Rückführeinrichtung umfasst Erfassungsmittel zur Erfassung des Betriebszustandes des Stromabnehmers, der nach vorab definierbaren Kriterien als regulär oder als kritisch bewertet wird. Ein kritischer Betriebszustand kann beispielsweise bei kritischer Ist-Relativlage vorliegen, wenn die Sensoreinrichtung ein Verlassen eines Fahrdrahtes des regulären Arbeitsbereiches einer Schleifleiste meldet. Ein kritischer Betriebszustand kann auch vorliegen, wenn ein Ausfall der Sensoreinrichtung und/oder der Steuereinrichtung und/oder eines Schwenkantriebs erfasst wird, da in diesem Fall die gesteuerte seitliche Nachführung des Stromabnehmers bei Lenkbewegungen des Fahrzeugs innerhalb des Fahrstreifens nicht mehr sicher ausgeführt wird. Ebenso liegt ein kritischer Betriebszustand vor, wenn ein Ausfall des Kippantriebs und/oder des Liftantriebs erfasst wird, da dann die vertikalen Stellbewegungen einerseits zum ausreichenden Andrücken der Schleifleistenanordnung an den Fahrdraht und andererseits zum Absenken des Stromabnehmers in die Parkposition nicht sicher durchführbar sind. Die Rückführeinrichtung umfasst Auslösemittel zur Einleitung einer Fallbewegung der Liftplattform und des Tragauslegers durch Deaktivierung von Kipp-, Schwenk- und Liftantrieb bei Erfassung eines kritischen Betriebszustandes des Stromabnehmers. Wenn Lift- und Kippantrieb kraftlos geschaltet sind, können die Liftplattform in Richtung Parkposition und gleichzeitig die Tragausleger in Richtung Ruheposition fallen. Die Rückführeinrichtung umfasst ferner Zentriermittel zur seitlichen Zwangsführung des fallenden Tragauslegers in seine Ruheposition. Die Zentriermittel können die Zentrierung des Tragauslegers passiv oder aktiv bewirken. Zur Erleichterung der Zentrierbewegung werden Schwenkantriebe durch die Auslösemittel drehmomentfrei geschaltet. Die Rückführung von Tragausleger und Liftplattform erfolgen erfindungsgemäß selbsttätig auch bei Ausfall von Antriebsenergiequellen und ist damit sicher in der Kategorie SIL2 entsprechend dem Standard IEC 61508 oder ASILB entsprechend dem Standard ISO 26262.

In einer vorteilhaften Ausführungsform des erfindungsgemäßen Fahrzeugs sind die Zentriermittel als eine am Liftgestell befestigte und parallel zur Fahrzeuglängsachse ausgerichtete Zentrierschiene mit V-förmigem Profil ausgebildet. In dieser Ausführung wirkt die Zentrierschiene rein passiv wie ein Trichter, indem der seitlich ausgeschwenkte Tragarm beim Auftreffen auf eine der beiden das V-Profil bildenden Führungsplatten in die fahrtrichtungsparallele Ruheposition gelenkt wird.

In einer bevorzugten Ausgestaltung des erfindungsgemäßen Fahrzeugs weisen die Zentriermittel eine Umlenkeinrichtung zur Umlenkung einer durch die fallende Liftplattform bewirkten Fallkraft in eine auf den fallenden Tragausleger ausgeübte Absenkkraft auf. Hierdurch wird die Fallbewegung des Tragauslegers, die aufgrund dämpfender Effekte des Kippantriebs nicht frei ist, aktiv durch eine Absenkkraft beschleunigt. Aufgrund der Umlenkeinrichtung wird dabei in vorteilhafter Weise die Lageenergie der Liftplattform sowie der damit fest verbundenen Bauteile in ein Kippmoment umgewandelt, welches den Tragausleger in seine Ruheposition zwingt.

Vorzugsweise weist die Umlenkeinrichtung des erfindungsgemäßen Fahrzeugs ein um ein Umlenkorgan gespanntes lineares Zugorgan auf. Das Umlenkorgan kann beispielsweise als Walze, Bolzen, Rolle, Rad oder dergleichen ausgebildet sein, während das Zugorgan durch ein Seil, einen Riemen, ein Band, eine Kette oder dergleichen gebildet sein kann. In einer Ausführung ist das Umlenkorgan fest mit der beweglichen Liftplattform verbunden und das Zugorgan an Tragausleger und Liftgestell befestigt. In eine anderen Ausführung ist das Umlenkorgan fest mit dem stehenden Liftgestell verbunden und das Zugorgan an der beweglichen Liftplattform und an einem beweglichen, den Tragausleger absenkenden Bolzen befestigt. Der Bolzen kann hierzu beispielsweise an einem Hebelarm angreifen, der mit dem Tragausleger bezüglich der Kippachse einen zweiseitigen Hebel bildet.

In einer vorteilhaften Ausgestaltung des erfindungsgemäßen Fahrzeugs weisen die Zentriermittel einen Umlenkmechanismus zur Umlenkung einer durch die fallende Liftplattform bewirkten Fallkraft in eine auf die Zentrierschiene ausgeübte Anhebekraft auf. In dieser Ausführung kann die Zentrierschiene bei Erfassung eines kritischen Betriebszustandes nach oben bewegt werden, um den Fallweg des Tragauslegers bis zur zentrierenden Zwangsführung zu verkürzen.

In eine vorteilhaften Ausgestaltung des erfindungsgemäßen Fahrzeugs weist die Zentrierschiene zwei parallel zur Fahrzeuglängsachse ausgerichtete Führungsplatten auf, die über ein Koppelgestänge aus einer Auflagestellung über Zentrierstellungen bis zu einer Arretierstellung faltbar sind. Das Koppelgestänge ist über Koppelgelenke gelenkig mit den Führungsplatten und einem Koppelblock verbunden. In der Auflagestellung sind die Führungsplatten in einer horizontalen Ebene angeordnet und bilden eine Auflagefläche für den Tragausleger. Das Koppelgestänge wird bei Erfassen eines kritischen Betriebszustandes durch zwei vom Liftgestell aufragende Gestellhebel betätigt und faltet die Führungsplatten in die Zentrierstellungen, in welchen diese ein V-förmiges Profil mit sich verkleinerndem Öffnungswinkel zur seitlichen Zwangsführung des Tragauslegers bilden. In der Arretierstellung stehen die Führungsplatten schließlich vertikal beidseitig des abgesenkten Tragauslegers und bilden gleichzeitig eine seitliche Fixierung des Tragauslegers in seiner Ruhestellung.

In einer weiteren vorteilhaften Ausführungsform des erfindungsgemäßen Fahrzeugs sind die Zentriermittel als Stellantrieb zur Erzeugung einer zentrierenden Stellbewegung des Tragauslegers ausgebildet. Dabei ist die Lageenergie der fallenden Liftplattform in Antriebsenergie für den Stellantrieb umwandelbar. Wird die Liftplattform beispielsweise durch einen pneumatischen oder hydraulischen Liftantrieb bewegt, so kann das beim Fallen der Liftplattform aus dem Arbeitszylinder gedrückte Arbeitsfluid über Leitungen einem entsprechend arbeitenden Stellantrieb für die Zentrierung zugeführt werden. Alternativ kann die fallende Liftplattform einen Generator antreiben, der elektrische Energie für einen elektrischen Stellantrieb erzeugt. In allen Fällen arbeitet der Stellantrieb unabhängig von externen Energiequellen.

In einer weiteren bevorzugten Ausgestaltung des erfindungsgemäßen Fahrzeugs ist die Schwenkachse aus der Vertikalen um einen spitzen Winkel in Fahrtrichtung verkippt ausgerichtet oder verkippbar. Ist die Schwenkachse eines Tragauslegers aus der Vertikalen verkippt, bewirkt die Schwerkraft des Tragauslegers mit Schleifleistenanordnung eine Verschenkung des Tragauslegers in Fahrtrichtung, wenn der Schwenkantrieb drehmomentfrei geschaltet ist. Diese Verkippung der Schwenkachse kann entweder fest eingerichtet sein oder aber ausgelöst bei Erfassen eines kritischen Betriebszustandes ausgehend von einer vertikal ausgerichteten Schwenkachse durch Verkippmittel vorgenommen werden.

In einer weiteren bevorzugten Ausführungsform des erfindungsgemäßen Fahrzeugs ist der Schwenkantrieb elektrisch antreibbar und weist eine lösbare Kupplung auf, welche unter normalen Betriebszuständen verbindend und bei Erfassung eines kritischen Betriebszustands automatisch gelöst ist. Hierdurch kann ein Schwenkantrieb drehmomentfrei zur leichtern Verschwenkung des Tragauslegers in seine Ruheposition geschaltet werden.

In einer weiteren vorteilhaften Ausgestaltung des erfindungsgemäßen Fahrzeugs ist der Liftantrieb als einfachwirkender pneumatischer Arbeitszylinder mit einem mit dem Liftgestell verbundenen Zylindergehäuse und mit einem über eine Hubstange mit der Liftplattform verbundenen Kolben ausgebildet. Dabei weist das Zylindergehäuse ein Schnellentlüftungsventil auf, welches bei Erfassung eines kritischen Betriebszustandes öffnet. Durch ein Entweichen der Druckluft über ein Schnellentlüftungsventil kann die Liftplattform schnell - wenigstens über einen Großteil ihres Fallweges - in Richtung Parkposition fallen und diese nach Auftreten eines kritischen Betriebszustandes in kurzer Zeit einnehmen.

Vorzugsweise weist das Zylindergehäuse ein weiteres Entlüftungsventil auf, welches gegenüber dem Schnellentlüftungsventil einen verminderten Strömungsquerschnitt aufweist. Es ist derart angeordnet, dass Luft aus dem Zylindergehäuse während des größten Teils des Fallweges über das Schnellentlüftungsventil und während des letzten Teils des Fallweges über das Entlüftungsventil entweicht. Hierdurch erfolgt der letzte Teil des Fallweges gedämpft, so dass ein hartes Aufschlagen bei Erreichen der Parkposition vermieden wird.

In einer anderen vorteilhaften Ausführungsform des erfindungsgemäßen Fahrzeugs hängt der Kolben in der unteren Parkposition der Liftplattform, in welcher der Tragausleger auf den Zentriermitteln aufliegt, frei und verdeckt das Entlüftungsventil nicht, so dass der Tragausleger durch das Eigengewicht von Kolben und Hubstange kraftschlüssig fixiert ist.

Weitere Eigenschaften und Vorteile der Erfindung ergeben sich aus nachfolgender Beschreibung der Zeichnungen, in deren
- FIG 1: ein Fahrzeug in Seitenansicht,
- FIG 2: für das Fahrzeug aus FIG 1 den Hublift in Parkposition und den Stromabnehmer in Ruheposition,
- FIG 3: für das Fahrzeug aus FIG 1 den Hublift in Betriebsposition und den Stromabnehmer in Ruheposition
- FIG 4: für das Fahrzeug aus FIG 1 den Hublift in Betriebsposition und den Stromabnehmer in Kontaktposition,
- FIG 5: das Fahrzeug aus FIG 1 in Draufsicht,
- FIG 6: ein erstes Ausführungsbeispiel einer Rückführeinrichtung für Hublift und Stromabnehmer,
- FIG 7: ein zweites Ausführungsbeispiel einer Rückführeinrichtung für Hublift und Stromabnehmer,
- FIG 8: ein erstes Ausführungsbeispiel von Zentriermitteln für den Stromabnehmer im Querschnitt,
- FIG 9: ein zweites Ausführungsbeispiel von Zentriermitteln für den Stromabnehmer in aufgefaltetem Zustand,
- FIG 10: das zweite Ausführungsbeispiel von Zentriermitteln aus FIG 9 in V-förmig gefaltetem Zustand,
- FIG 11: das zweite Ausführungsbeispiel von Zentriermitteln aus FIG 9 in zugefaltetem Zustand,
- FIG 12: ein Blockschaltbild einer erfindungsgemäßen Rückführeinrichtung für Stromabnehmer und Hublift, und
- FIG 13: ein drittes Ausführungsbeispiel von Zentriermitteln für den Stromabnehmer in Seitenansicht
schematisch veranschaulicht sind.

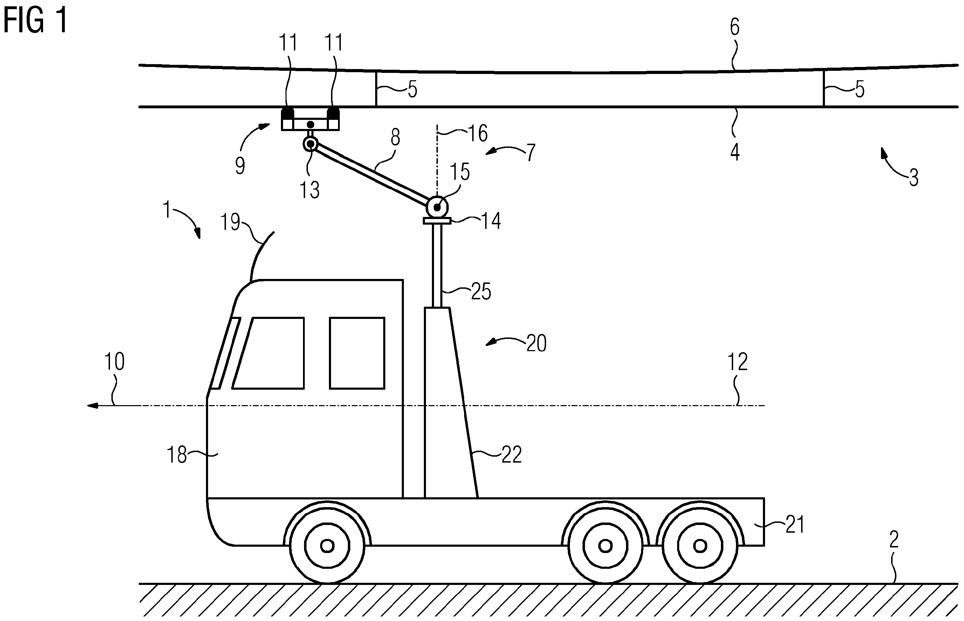

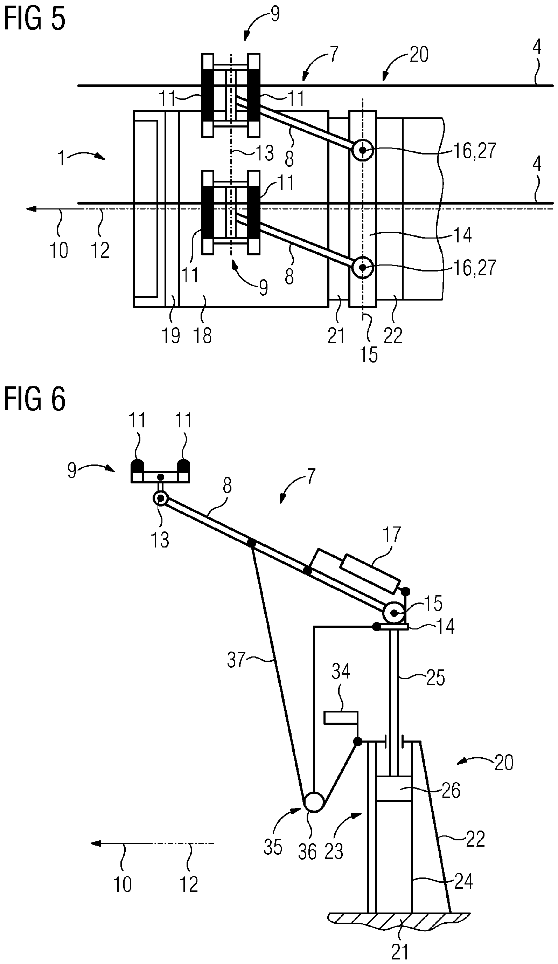

Gemäß FIG 1 und FIG 5 ist ein nicht schienengebundenes Fahrzeug 1 als Sattelzugmaschine ausgebildet und elektrisch oder hybrid-elektrisch angetrieben. Elektrische Energie für den Traktionsbetrieb wird durch eine an der Fahrbahn 2 installierte Oberleitungsanlage 3 bereitgestellt, die zweipolig - also mit zwei als Hin- und Rückleiter ausgebildeten Fahrdrähten 4 - ausführt ist. Die parallel zueinander und etwa fahrbahnmittig verlaufenden Fahrdrähte 4 sind über Hänger 5 an Tragseilen 6 befestigt. Die Tragseile 6 werden von nicht dargestellten, an Masten angebrachten Seitenhaltern getragen.

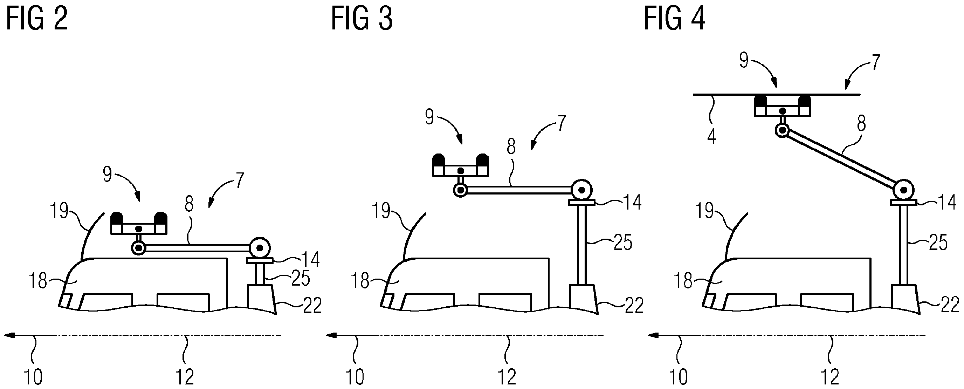

Zur Einspeisung von elektrischer Energie aus der Oberleitungsanlage 3 in das Fahrzeug 1 umfasst dieses einen Stromabnehmer 7 mit zwei Tragauslegern 8. Jeder Tragausleger 8 trägt an seinem freien Ende eine Schleifleistenanordnung 9, die jeweils zwei in Fahrtrichtung 10 hintereinander angeordnete, längliche Schleifleisten 11 aufweisen. Die Schleifleisten 11 einer Schleifleistenanordnung 9 sind parallel zu einer horizontal und quer zur Fahrzeuglängsachse 12 ausgerichteten Wippenachse 13 angeordnet und wippenartig um diese drehbar am Tragausleger 8 angelenkt. An seinem fahrzeugseitigen Ende ist jeder Tragausleger 8 derart an einer Liftplattform 14 angelenkt, dass Tragausleger 8 und Schleifleistenanordnungen 9 sowohl um eine horizontale Kippachse 15 als auch um eine zu dieser senkrecht stehende Schwenkachse 16 drehbar sind. Der Stromabnehmer 7 weist gemäß FIG 6 einen pneumatischen Kippantrieb 17 zur Erzeugung einer vertikalen Stellbewegung der Schleifleistenanordnungen 9 durch Aufrichten der Tragauslegers 8 aus einer Ruheposition, dargestellt in FIG 2 und 3, in eine angestellte Kontaktposition, dargestellt in FIG 1, FIG 4, FIG 6 und FIG 7, auf.

Gemäß FIG 2 und 3 sind die Tragausleger 8 des Stromabnehmers 7 in der Ruheposition parallel zur Fahrzeuglängsachse 12 ausgerichtet und erstrecken sich vom fahrzeugseitigen Ende zum freien Ende hin in Fahrtrichtung 10. Gemäß FIG 1, FIG 4, FIG 6 und FIG 7 sind die Tragausleger 8 des Stromabnehmers 7 in der Kontaktposition aufgerichtet, in welcher sie gegen die Horizontale soweit angestellt aufgerichtet sind, dass elektrischer Kontakt zwischen Schleifleistenanordnungen 9 und Fahrdrähten 4 herstellbar ist.

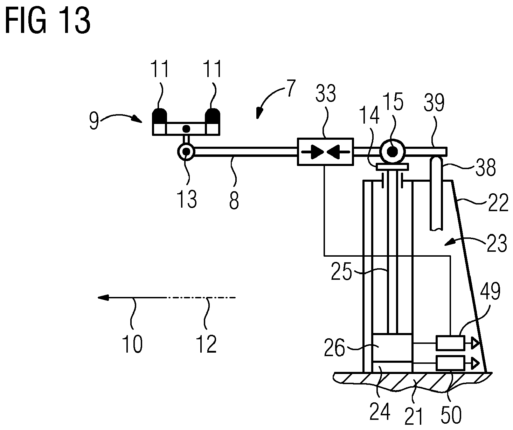

Der Stromabnehmer 7 ist kurz genug ausgeführt, dass er in Ruheposition der Tragausleger 8 gemäß FIG 2 oberhalb einer Fahrerkabine 18 ablegbar ist, ohne dabei in Fahrtrichtung 10 über die Fahrerkabine 18 hinauszuragen. Dadurch kann der Stromabnehmer 7 im Windschatten eines dachseitig auf der Fahrerkabine 18 angeordneten Windschutzes 19 verstaut werden. Um die Distanz zur elektrischen Kontaktherstellung mit den Fahrdrähten 4 überbrücken zu können, ist der Stromabnehmer 7 mittels eines Hublifts 20 höhenverstellbar. Der Hublift 20 umfasst ein sich hinter der Fahrerkabine 18 auf einen Fahrzeugrahmen 21 des Fahrzeugs 1 abstützendes Liftgestell 22 sowie die Liftplattform 14, welche mittels eines Liftantriebs 23 von einer unteren Parkposition gemäß FIG 2 und FIG 13 in eine obere Betriebsposition gemäß FIG 1, FIG 3, FIG 4, FIG 6 und FIG 7 vertikal verfahrbar ist. Der Liftantrieb 23 ist gemäß FIG 6, FIG 7 und FIG 13 als einfachwirkender pneumatischer Arbeitszylinder mit einem mit dem Liftgestell 22 verbundenen Zylindergehäuse 24 und mit einem über eine Hubstange 25 mit der Liftplattform 14 verbundenen Kolben 26 ausgebildet. Es können auch mehrere parallel geschaltete Arbeitszylinder vorgesehen sein.

Aufgrund der nicht vorhandenen Spurbindung kann das erfindungsgemäße Fahrzeug 1 im Gegensatz zu einem Schienenfahrzeug auf der Fahrbahn 2 gelenkt werden, um beispielsweise den elektrifizierten Fahrstreifen zu halten. Aufgrund von Lenkungenauigkeiten des Fahrers oder durch gewollte Lenkmanöver zum Ausweichen, Überholen oder Abbiegen ändert sich die seitliche Lage der Schleifleistenanordnungen 9 relativ zu den Fahrdrähten 4. Um den Schleifkontakt zu den Fahrdrähten 4 zu halten, weist der Stromabnehmer 7 als elektrische Torquemotoren ausgebildete Schwenkantriebe 27 auf, um eine laterale Stellbewegung der Schleifleistenanordnung 9 durch seitliches Verschwenken der in Kontaktposition angestellten Tragausleger 8 gemäß FIG 5 zu erzeugen.

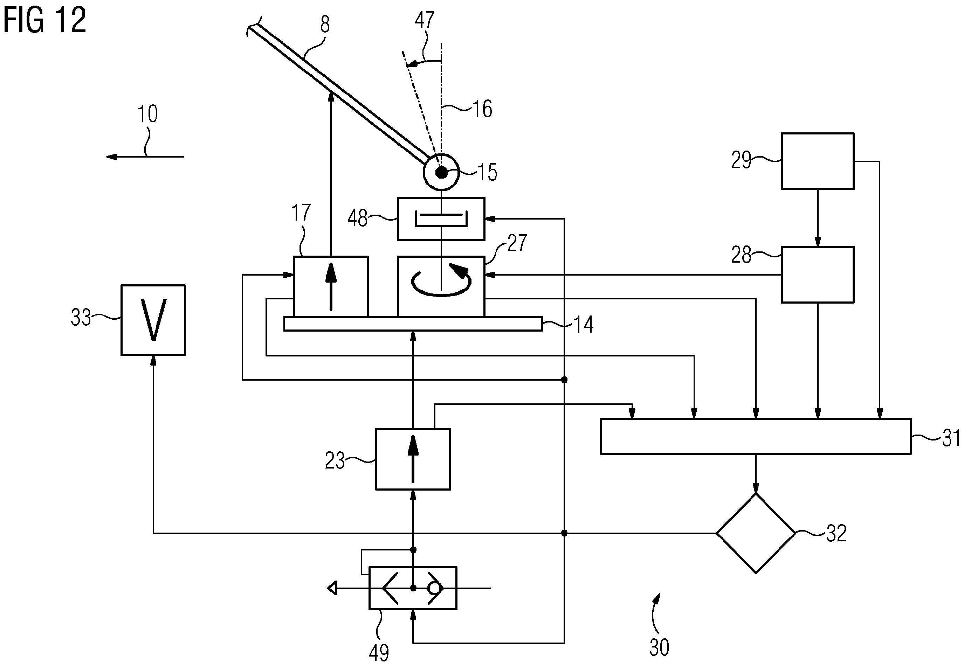

Zur Ansteuerung der Schwenkantriebe 27 ist gemäß FIG 12 in Verbindung mit FIG 5 eine Steuereinrichtung 28 vorgesehen, der die von einer Sensoreinrichtung 29 erfasste seitlichen Ist-Lage der Schleifleistenanordnungen 9 relativ zu den Fahrdrähten 4 zugeführt wird. Die Sensoreinrichtung 28 kann die Fahrdrahtlage in einem Nahbereich von den Schleifleistenanordnungen 9 aus und/oder in einem Fernbereich vom Fahrzeugrahmen 21 aus erfassen und auf elektromagnetischen oder optischen Messprinzipien beruhen. Ziel der Ansteuerung ist es, die Kontaktpunkte der Fahrdrähte 4 auf den Schleifleisten 11 innerhalb eines vordefinierten Arbeitsbereiches der Schleifleisten 11 zu halten. Ein weiteres Steuerziel kann sein, die Schleifleisten 11 innerhalb ihrer Arbeitsbereiche möglichst gleichmäßig abzunutzen - etwa durch eine pendelnde Schwenkbewegung der Tragausleger 8.

Lenkmanöver können auch dazu führen, dass die Fahrdrähte 4 den Arbeitsbereich der Schleifleisten 11 verlassen, wenn der seitliche Schwenkbereich der Tragausleger 8 ausgeschöpft ist, die Steuereinrichtung 28 also den großen seitliche Versatz zwischen Schleifleisten 11 und Fahrdrähten 4 nicht mehr kompensieren kann. Ein solcher Betriebszustand des Stromabnehmers 7 ist als kritisch einzustufen, da es beim Abgleiten der Fahrdrähte 4 aus den Arbeitsbereichen der Schleifleisten 11 zur Bildung von Funken oder Lichtbögen oder zu mechanischen Schäden durch Verhaken mit Teilen der Oberleitungsanlage 3 kommen kann. Damit in einem solchen Fall oder auch bei anderen kritischen Betriebszuständen - wie einem Ausfall der Steuereinrichtung 29 und/oder des Liftantriebs 23, des Schwenkantriebs 27 und/oder des Kippantriebs 17 - Stromabnehmer 7 und Hublift 20 eine definierte, sichere Position einnehmen, ist gemäß FIG 12 eine Rückführeinrichtung 30 zur selbsttätigen Rückführung der Liftplattform 14 in ihre Parkposition und der Tragausleger 8 in ihre Ruheposition vorgesehen.

Die Rückführeinrichtung 30 umfasst gemäß FIG 12 Erfassungsmittel 31 zur Erfassung des Betriebszustandes des Stromabnehmers 7 und des Hublifts 20. Die Erfassungsmittel 31 können die Sensoreinrichtung 29 umfassen oder damit in Kommunikationsverbindung stehen, um zu erfassen, wenn ein von einer Schleifleistenanordnung 9 beschliffener Fahrdraht 4 den Arbeitsbereich einer Schleifleiste 11 verlässt. Ebenso stehen die Erfassungsmittel 31 mit der Steuereinrichtung 28 in Kommunikationsverbindung, um zu erfassen, wenn diese ausfällt oder diese meldet, dass der Liftantrieb 23, der Schwenkantrieb 27 und/oder der Kippantrieb 17 nicht betriebsbereit ist. Hierzu können die Erfassungsmittel 31 auch direkt mit den genannten Antrieben in Kommunikationsverbindung stehen. Die Rückführeinrichtung 30 umfasst ferner Auslösemittel 32 zur Einleitung einer Fallbewegung der Liftplattform 14 und der Tragausleger 8 durch Deaktivierung von Kippantrieb 17, Schwenkantrieb 27 und Liftantrieb 23, wenn ein vorab definierter kritischer Betriebszustand erfasst wird. Die Auslösemittel 32 schalten die Kippantriebe 17 und den Liftantrieb 23 kraftfrei, so dass die Tragarme 8 des Stromabnehmers 7 aus ihrer Kontaktposition und die Liftplattform 14 mit dem Stromabnehmer 7 aus ihrer Betriebsposition unter möglichst geringem Widerstand durch ihr Eigengewicht getrieben nach unten fallen können. Die Auslösemittel 32 können auch die elektrischen Schwenkantriebe 27 drehmomentfrei schalten, um ein Zentrieren der Tragarme 8 aus einer seitlich verschwenkten Position in ihre fahtrichtungsparallele Ruheposition zu erleichtern. Hierzu umfasst die Rückführeinrichtung 30 ferner Zentriermittel 33 zur seitlichen Zwangsführung eines fallenden Tragauslegers 8 in seine Ruheposition.

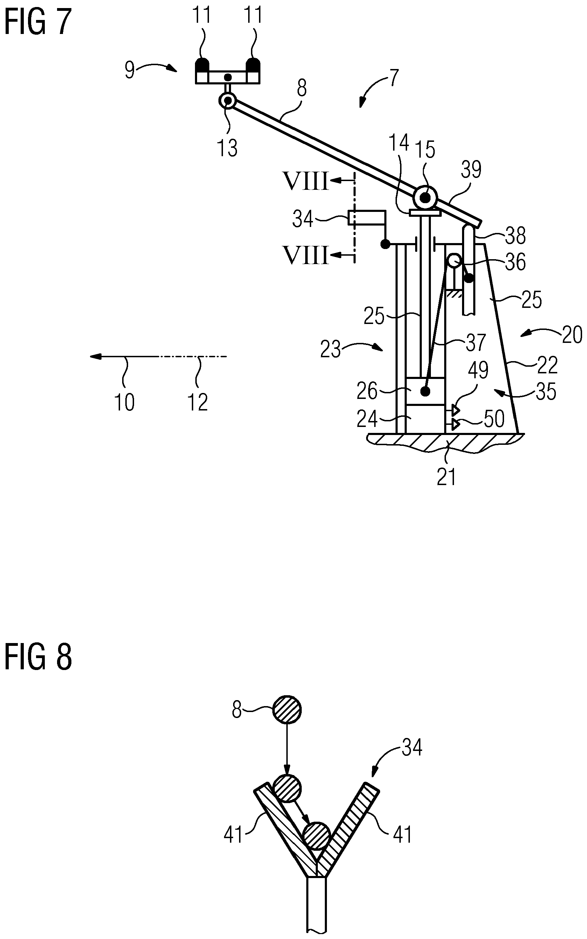

Gemäß FIG 6 und FIG 7 können die Zentriermittel 33 als eine am Liftgestell 22 befestigte und parallel zur Fahrzeuglängsachse 12 ausgerichtete Zentrierschiene 34 ausgebildet sein. Gemäß FIG 8 weist die Zentrierschiene 34 ein V-förmiges Profil auf, um den Tragausleger 8 trichterartig beim Fallen in Richtung Ruheposition zu zentrieren. Zur Unterstützung der Fallbewegung der Tragausleger 8 weisen die Zentriermittel 33 eine Umlenkeinrichtung 35 zur Umlenkung einer durch die fallende Einheit aus Liftplattform 14 und Stromabnehmer 7 bewirkten Fallkraft in eine auf den fallenden Tragausleger 8 ausgeübte Absenkkraft auf. Die Umlenkeinrichtung 35 weist ein um ein Umlenkorgan 36 gespanntes lineares Zugorgan 36 auf. Das Umlenkorgan 36 kann beispielsweise durch eine Walze, einen Bolzen, eine Rolle, ein Kettenrad oder dergleichen, während das Zugorgan 37 durch ein Seil, einen Riemen, ein Band, eine Kette oder dergleichen gebildet sein kann.

In einem ersten Ausführungsbeispiel gemäß FIG 6 ist das Umlenkorgan 36 fest mit der beweglichen Liftplattform 14 verbunden, während das Zugorgan 37 an Tragausleger 8 und Liftgestell 22 befestigt und unterhalb um das Umlenkorgan 36 geführt ist. Fällt die Liftplattform 14 nach unten, drückt diese das Umlenkorgan 36 in das Zugorgan 37, welches dadurch den Tragarm 8 nach unten zieht.

In einem zweiten Ausführungsbeispiel gemäß FIG 7 und FIG 13 ist das Umlenkorgan 36 fest mit dem stehenden Liftgestell 22 verbunden, während das Zugorgan 37 an der beweglichen Liftplattform 14 und an einem beweglichen, den Tragausleger 8 absenkenden Bolzen 38 befestigt und oberhalb um das Umlenkorgan 36 geführt ist. Fällt die Liftplattform 14 nach unten, zieht diese das Zugorgan 37 an ihrem Ende nach unten, wodurch der am anderen Ende das Zugorgan 37 befestigte Bolzen 38 nach oben gezogen wird. Der Bolzen 38 drückt bei hinreichender Annäherung gegen einen Hebelarm 39, der mit dem Tragausleger 8 bezüglich der Kippachse 15 einen zweiseitigen Hebel bildet. Dadurch wird die Absenkbewegung des Tragauslegers 8 aktiv unterstützt.

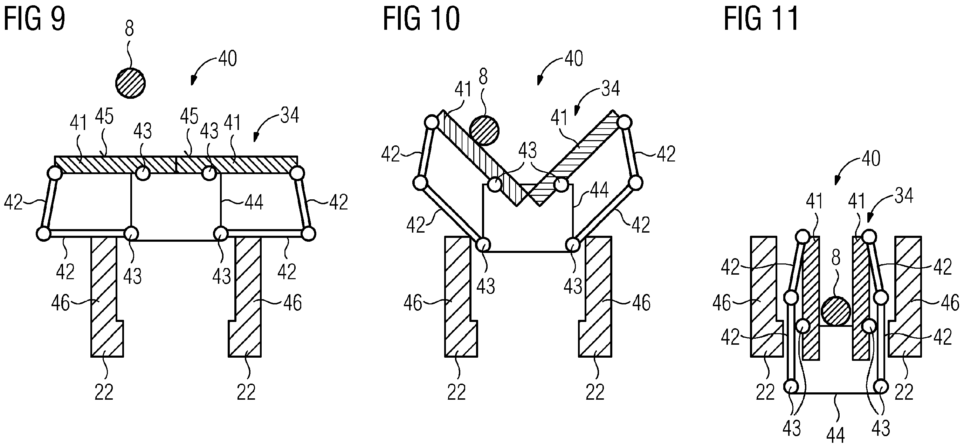

Zur Verkürzung des Fallweges der Tragausleger 8 bis zum Erreichen ihrer Ruheposition kann vorgesehen sein, dass die Zentriermittel 33 einen Umlenkmechanismus 40 zur Umlenkung einer durch die fallende Liftplattform 14 bewirkten Fallkraft in eine auf die Zentrierschiene 34 ausgeübte Anhebekraft aufweist. In einer Ausführung kann der Umlenkmechanismus 40 ein Anheben der kompletten Führungsschiene 34 bewerkstelligen, die gemäß FIG 8 aus zwei fest zu einem V-förmigen Profil zusammengefügten Führungsplatten 41 besteht. In einer anderen Ausführung gemäß FIG 9 bis FIG 11 kann die Zentrierschiene 34 zwei parallel zur Fahrzeuglängsachse 12 ausgerichtete Führungsplatten 41 aufweisen, die über einen Umlenkmechanismus 40 aus Koppelgestänge 42, Koppelgelenken 43 und Koppelblock 44 aus einer Auflagestellung gemäß FIG 9, in welcher die Führungsplatten 41 eine horizontale Auflagefläche 45 für den Tragausleger 8 bilden, über Zentrierstellungen gemäß FIG 10, in welcher die Führungsplatten 41 ein V-förmiges Profil zur seitlichen Zwangsführung des Tragauslegers 8 bilden, bis zu einer Arretierstellung gemäß FIG 11, in welcher die Führungsplatten 41 vertikal beidseitig des abgesenkten Tragauslegers 8 stehen, gefaltet werden. Dabei betätigen vom Liftgestell 22 aufragende Gestellhebel 46 den Umlenkmechanismus 40.

In einer weiteren Ausführung können die Zentriermittel 33, wie in FIG 13 angedeutet, als Stellantrieb zur Erzeugung einer zentrierenden Stellbewegung des Tragauslegers 8 ausgebildet sein, wobei die Lageenergie der fallenden Liftplattform 14 in Antriebsenergie für den Stellantrieb umwandelbar ist. Hierzu kann im Zylindergehäuse 26 befindliche Luft vom fallenden Kolben 26 des Liftantriebs 23 einem pneumatisch arbeitenden Stellantrieb der Zentriermittel 33 zugeführt werden, um einen Tragausleger 8 zu zentrieren. Das Prinzip ist entsprechend auf hydraulisch arbeitende Stellantriebe übertragbar. Arbeitet der Stellantrieb der Zentriermittel 33 elektrisch, könnte die fallende Liftplattform 14 auch einen Generator antreiben, der elektrische Energie zur Versorgung des Stellantriebs liefert, ohne auf eventuell ausgefallene Energiequellen oder auf einen ausgefallenen Schwenkantrieb 27 angewiesen zu sein.

In einer weiteren Ausführung, die auch mit anderen, oben beschriebenen Ausführungen kombinierbar ist, sind die Schwenkachsen 16 gemäß FIG 12 aus der Vertikalen um einen spitzen Winkel 47 in Fahrtrichtung 10 verkippt ausgerichtet oder in diese Lage verkippbar. Bei derart verkippten Schwenkachsen 16 genügt die Schwerkraft, um die Tragarme 8 des Stromabnehmers 7 in ihre Ruhepositionen zu schwenken. Wie bereits oben erwähnt, können die Auslösemittel 32 zur Erleichterung dieser Schwenkzentrierung die elektrischen Schwenkantriebe 27 drehmomentfrei schalten. Hierzu kann der Schwenkantrieb 27 eine lösbare Kupplung 48 aufweisen, welche unter normalen Betriebszuständen verbindend und bei Erfassung eines kritischen Betriebszustands automatisch gelöst wird. Damit die Fallbewegung der Liftplattform 14 zunächst möglichst wenig gebremst wird, weist gemäß FIG 13 das Zylindergehäuse 24 im unteren Bereich ein Schnellentlüftungsventil 49 auf, welches bei Erfassung eines kritischen Betriebszustandes öffnet. Unterhalb des Schnellentlüftungsventils 49 weist das Zylindergehäuse 24 ein weiteres Entlüftungsventil 50 auf, welches gegenüber dem Schnellentlüftungsventil 49 einen verminderten Strömungsquerschnitt aufweist. Die Anordnung ist derart, dass Luft aus dem Zylindergehäuse 24 während des größten Teils des Fallweges der Liftplattform 14 über das Schnellentlüftungsventil 49 entweicht, bis der Kolben 26 den Auslass zum Schnellentlüftungsventil 49 verdeckt. Dann kann Luft während des letzten Teils des Fallweges nur noch über das Entlüftungsventil 50 mit verminderter Strömungsgeschwindigkeit entweichen. Durch die vermindere Fallgeschwindigkeit wird eine Dämpfung beim Erreichen der Parkposition der Liftplattform 14 erreicht. Gemäß FIG 13 hat der Tragarm 8 seine Ruheposition und die Liftplattform 14 ihre Parkposition erreicht. Dabei liegen Tragarm 8 auf den Zentriermitteln 33 und Hebelarm 39 auf dem Bolzen 38 auf. Der Kolben 26 hat in diesem Zustand noch nicht den Boden des Zylindergehäuses 24 erreicht, sodass Liftplattform 14, Hubstange 25 und Kolben 26 frei hängen und vorzugsweise der Auslass zum Entlüftungsventil 50 durch den Kolben 26 nicht verdeckt ist. Durch das Eigengewicht von Liftplattform 14, Hubstange 25 und Kolben 26 ist der Tragausleger 8 kraftschlüssig in seiner Ruheposition fixiert, ohne dass hier besondere Vorkehrungen getroffen werden müssen.

## Patentansprüche

1. Nicht schienengebundenes, elektrisch oder hybrid-elektrisch angetriebenes Fahrzeug (1) für den Betrieb an einer fahrbahnseitig installierten, zweipoligen Oberleitungsanlage (3) mit als Hin- und Rückleiter ausgebildeten Fahrdrähten (4), umfassend
- einen Hublift (20)
- mit einem sich auf einen Fahrzeugrahmen (21) abstützenden Liftgestell (22),
- mit einer vertikal verfahrbaren Liftplattform (14) und
- mit einem Liftantrieb (23) zur Erzeugung einer Hubbewegung der Liftplattform (14) von einer unteren Parkposition in eine obere Betriebsposition, und
- einen Stromabnehmer (7) zur Einspeisung elektrischer Energie mit mindestens einem Tragausleger (8), der an seinem freien Ende eine Schleifleistenanordnung (9) trägt und an seinem fahrzeugseitigen Ende derart an der Liftplattform (14) angelenkt ist, dass Tragausleger (8) und Schleifleistenanordnung (9) um eine horizontale Kippachse (15) und um eine zu dieser senkrecht stehenden Schwenkachse (16) drehbar sind,
- mit einem Kippantrieb (17) zur Erzeugung einer vertikalen Stellbewegung der Schleifleistenanordnung (9) durch Aufrichten des Tragauslegers (8) aus einer Ruheposition, in der der Tragausleger (8) parallel zur Fahrzeuglängsachse (12) ausgerichtet liegt, in eine angestellte Kontaktposition, in der elektrischer Kontakt zwischen Schleifleistenanordnung (9) und Fahrdrähten (4) herstellbar ist,
- mit einem Schwenkantrieb (27) zur Erzeugung einer lateralen Stellbewegung der Schleifleistenanordnung (9) durch seitliches Verschwenken des in Kontaktposition angestellten Tragauslegers (8),
- mit einer Sensoreinrichtung (29) zur Erfassung der seitlichen Ist-Lage der Schleifleistenanordnung (9) relativ zu den Fahrdrähten (4), und
- mit einer Steuereinrichtung (28) zur Ansteuerung des Schwenkantriebs (27) in Abhängigkeit der erfassten Ist-Lage, **dadurch gekennzeichnet,**
**dass** der Stromabnehmer (7) eine Rückführeinrichtung (30) zur selbsttätigen Rückführung der Liftplattform (14) in ihre Parkposition und des Tragauslegers (8) in seine Ruheposition aufweist, welche umfasst
- Erfassungsmittel (31) zur Erfassung des Betriebszustandes des Stromabnehmers,
- Auslösemittel (32) zur Einleitung einer Fallbewegung der Liftplattform (14) und des Tragauslegers (8) durch Deaktivierung von Kippantrieb (17), Schwenkantrieb (27) und Liftantrieb (23) bei Erfassung eines vorab definierbaren kritischen Betriebszustandes des Stromabnehmers (7), und
- Zentriermittel (33) zur seitlichen Zwangsführung des fallenden Tragauslegers (8) in seine Ruheposition.

2. Fahrzeug (1) nach Anspruch 1, wobei die Zentriermittel (33) als eine am Liftgestell (22) befestigte und parallel zur Fahrzeuglängsachse (12) ausgerichtete Zentrierschiene (34) mit V-förmigem Profil ausgebildet sind.

3. Fahrzeug (1) nach Anspruch 1 oder 2, wobei die Zentriermittel (33) eine Umlenkeinrichtung (35) zur Umlenkung einer durch die fallende Liftplattform (14) bewirkten Fallkraft in eine auf den fallenden Tragausleger (8) ausgeübte Absenkkraft aufweist.

4. Fahrzeug (1) nach Anspruch 3, wobei die Umlenkeinrichtung (35) ein um ein Umlenkorgan (36) gespanntes lineares Zugorgan (37) aufweist, wobei das Umlenkorgan (36) fest mit der beweglichen Liftplattform (14) verbunden und das Zugorgan (37) an Tragausleger (8) und Liftgestell (22) befestigt sind, oder wobei das Umlenkorgan (36) fest mit dem stehenden Liftgestell (22) verbunden und das Zugorgan (37) an der beweglichen Liftplattform (14) und an einem beweglichen, den Tragausleger (8) absenkenden Bolzen (38) befestigt ist.

5. Fahrzeug (1) nach einem der Ansprüche 1 bis 4, wobei die Zentriermittel (33) einen Umlenkmechanismus (40) zur Umlenkung einer durch die fallende Liftplattform (14) bewirkten Fallkraft in eine auf die Zentrierschiene (34) ausgeübte Anhebekraft aufweist.

6. Fahrzeug (1) nach einem der Ansprüche 1 bis 5, wobei die Zentrierschiene (34) zwei parallel zur Fahrzeuglängsachse (12) ausgerichtete Führungsplatten (41) aufweist, die über ein Koppelgestänge (42) aus einer Auflagestellung, in welcher die Führungsplatten (41) eine horizontale Auflagefläche (45) für den Tragausleger (8) bilden, über Zentrierstellungen, in welchen die Führungsplatten (41) ein V-förmiges Profil zur seitlichen Zwangsführung des Tragauslegers (8) bilden, bis zu einer Arretierstellung, in welcher die Führungsplatten (41) vertikal beidseitig des abgesenkten Tragauslegers (8) stehen, faltbar sind.

7. Fahrzeug (1) nach Anspruch 1, wobei die Zentriermittel (33) als Stellantrieb zur Erzeugung einer zentrierenden Stellbewegung des Tragauslegers (8) ausgebildet sind, wobei die Lageenergie der fallenden Liftplattform (14) in Antriebsenergie für den Stellantrieb umwandelbar ist.

8. Fahrzeug (1) nach einem der Ansprüche 1 bis 7, wobei die Schwenkachse (16) aus der Vertikalen um einen spitzen Winkel (47) in Fahrtrichtung (10) verkippt ausgerichtet oder verkippbar ist.

9. Fahrzeug (1) nach einem der Ansprüche 1 bis 8, wobei der Schwenkantrieb (27) elektrisch antreibbar ist und eine lösbare Kupplung (48) aufweist, welche unter normalen Betriebszuständen verbindend und bei Erfassung eines kritischen Betriebszustands automatisch gelöst ist.

10. Fahrzeug (1) nach einem der Ansprüche 1 bis 9, wobei der Liftantrieb (23) als einfachwirkender pneumatischer Arbeitszylinder mit einem mit dem Liftgestell (22) verbundenen Zylindergehäuse (24) und mit einem über eine Hubstange (25) mit der Liftplattform (14) verbundenen Kolben (26) ausgebildet ist, wobei das Zylindergehäuse (24) ein Schnellentlüftungsventil (49) aufweist, welches bei Erfassung eines kritischen Betriebszustandes öffnet.

11. Fahrzeug (1) nach Anspruch 10, wobei das Zylindergehäuse (24) ein weiteres Entlüftungsventil (50) aufweist, welches gegenüber dem Schnellentlüftungsventil (49) einen vermindertem Strömungsquerschnitt aufweist und derart angeordnet ist, dass Luft aus dem Zylindergehäuse (24) während des größten Teils des Fallweges über das Schnellentlüftungsventil (49) und während des letzten Teils des Fallweges über das Entlüftungsventil (50) entweicht.

12. Fahrzeug (1) nach Anspruch 11, wobei der Kolben (26) in der unteren Parkposition der Liftplattform (14), in welcher der Tragausleger (8) auf den Zentriermitteln (33) aufliegt, frei hängt und das Entlüftungsventil (50) nicht verdeckt, so dass der Tragausleger (8) durch das Eigengewicht von Kolben (26) und Hubstange (25) kraftschlüssig fixiert ist.
